# EUROPÄISCHE PATENTANMELDUNG

(11) **EP 4 428 408 A1**
(43) Veröffentlichungstag der Anmeldung: **11.09.2024**
(21) Anmeldenummer: 24161642.4
(22) Anmeldetag: 06.03.2024
(51) Int. Cl.: F16K 3/26, F16K 31/04, F16K 31/50, F16K 47/08

(54) **VENTIL FÜR EINE FLUIDLEITUNG, VENTILSYSTEM SOWIE VERFAHREN ZUM BETREIBEN EINES VENTILS**

(30) Priorität: 06.03.2023 DE 102023105457
(71) Anmelder: HHMW GmbH & Co. KG, 27389 Lauenbrück (DE)
(72) Erfinder: Selent, Jürgen, 27389 Lauenbrück (DE)
(74) Vertreter: Bals & Vogel Patentanwälte PartGmbB

(57) **Zusammenfassung**

Die Erfindung betrifft ein Ventil (100) für eine Fluidleitung. Das Ventil weist Folgendes auf:
- ein Gehäuse (10),
- einen Kolben (15) mit einer Dichtfläche (16), der in einer Öffnungsstellung einen Fluidauslass (12) zur Durchleitung des Fluides freigibt und in einer Schließstellung einen Fluidauslass (12) zur Sperrung der Durchleitung des Fluides verschließt, wobei der Kolben (15) zur Bewegung zwischen der Öffnungsstellung und der Schließstellung axial- und drehbeweglich geführt ist,
- einen ersten Durchgangskörper (17), welcher statisch befestigt ist und welcher eine statische Durchgangsöffnung (18) aufweist,
- einen zweiten Durchgangskörper (19), welcher axial- und/oder drehbeweglich geführt ist und welcher eine dynamische Durchgangsöffnung (20) aufweist. Der Kolben (15) und der zweite Durchgangskörper (19) sind an der Antriebswelle (14) befestigt. Zudem ist der zweite Durchgangskörper (19) derart axial verschoben und gedreht oder gedreht zu dem ersten Durchgangskörper (17) anordenbar, dass in einer Durchlassstellung die dynamische Durchgangsöffnung (20) zur Durchleitung des Fluides zumindest teilweise fluchtend zu der statischen Durchgangsöffnung (18) angeordnet ist, und dass in einer Sperrstellung der zweite Durchgangskörper (19) die statische Durchgangsöffnung (18) zur Sperrung der Durchleitung des Fluides verschließt.

## Beschreibung

Die Erfindung betrifft allgemein das Gebiet der Fluidleitungen, insbesondere der Hochdruckfluidleitungen, wie etwa Hochdruckfluidleitungen für den Kraftwerksbereich oder bei Dampfturbinen. Im Speziellen betrifft die Erfindung ein Ventil für eine Fluidleitung, ein Ventilsystem mit einem solchen Ventil sowie ein Verfahren zum Betreiben eines solchen Ventils.

Ventile zum Regeln, Schließen und Öffnen eines Fluidstroms in einer Fluidleitung arbeiten nach aktuellem Stand der Technik in der Regel mit einem Kolben, der in der Hochdruckfluidleitung axial zwischen einer geschlossenen und einer geöffneten Position verfahren kann. Hierfür kommen insbesondere zwei unterschiedliche Ventilaufbauten zum Einsatz.

In einer ersten bekannten Variante wird ein Kolben zum Öffnen aus einem Dichtsitz herausgefahren. Je nach angefahrener Position des Kolbens wird ein entsprechender Öffnungsspalt erzeugt, über den ein Volumenstrom des Fluides reguliert wird. Zum Abbrechen des Volumenstroms des Fluides, d. h., zum Schließen des Auslasses wird der Kolben wieder in seinen Dichtsitz gefahren.

In einer zweiten bekannten Variante ist ein Durchgangskörper vorgesehen, welcher zwischen einem Ventiltrieb und einem Ventilausgang verbaut ist. Bei einer solchen Variante verfährt der Kolben axial innerhalb des Durchgangskörpers. Je weiter entfernt von einem Auslass des Ventils der Kolben verfährt, umso größer wird der Durchflussquerschnitt des Durchgangskörpers.

Bei den bekannten Varianten eines Ventils sind jedoch sehr lange axiale Verfahrwege des Kolbens notwendig, um den Volumenstrom des Fluides vollständig zu unterbrechen oder wieder vollständig freizugeben. Lange Verfahrwege des Kolbens bringen viele Nachteile mit sich, die sowohl Verschleiß, Reaktions- sowie Regelzeiten als auch Effizienz, Kosten und Risiken betreffen.

Es ist Aufgabe der vorliegenden Erfindung, die voranstehend beschriebenen Nachteile bei Ventilen für Fluidleitungen zumindest teilweise zu beheben. Insbesondere ist es Aufgabe der vorliegenden Erfindung, die Regelung von Ventilen in Fluidleitungen, insbesondere in Hochdruckfluidleitungen, besser, insbesondere schneller und präziser, zu gestalten.

Die voranstehende Aufgabe wird gelöst durch ein Ventil für eine Fluidleitung mit den Merkmalen des Anspruchs 1, durch ein Ventilsystem für eine Fluidleitung mit den Merkmalen des Anspruchs 6 sowie durch ein Verfahren zum Betreiben eines Ventils für eine Fluidleitung mit den Merkmalen des Anspruchs 12. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Ventil beschrieben sind, selbstverständlich auch im Zusammenhang mit dem erfindungsgemäßen Ventilsystem und/oder Verfahren und jeweils umgekehrt, sodass bezüglich der Offenbarung zu den einzelnen Erfindungsaspekten stets wechselseitig Bezug genommen wird bzw. werden kann.

Mit Ausführungsformen der Erfindung kann in vorteilhafter Weise ein verbessertes Ventil für eine Fluidleitung, insbesondere für eine Hochdruckfluidleitung, bereitgestellt werden. Mit einem solchen Ventil kann der Durchfluss in einer Hochruckfluidleitung besser, insbesondere schneller und präziser, geregelt werden. Mit einem solchen Ventil kann zudem die Sicherheit einer Fluidleitung erhöht werden.

Ein erster Aspekt der vorliegenden Erfindung betrifft ein Ventil für eine Fluidleitung insbesondere für Hochdruckfluidleitungen, wie etwa Hochdruckfluidleitungen für den Kraftwerksbereich oder bei Dampfturbinen. Das Ventil weist Folgendes auf:
- ein Gehäuse mit einem Fluideinlass, einem Fluidauslass und einer Fluidleitung zur Durchleitung eines Fluides von dem Fluideinlass zu dem Fluidauslass,
- einen im Gehäuse angeordneten Kolben mit einer Dichtfläche, der in einer Öffnungsstellung den Fluidauslass zur Durchleitung des Fluides freigibt und in einer Schließstellung den Fluidauslass zur Sperrung der Durchleitung des Fluides verschließt, wobei der Kolben zur Bewegung zwischen der Öffnungsstellung und der Schließstellung über eine Antriebswelle eines Ventilsystems axial- und drehbeweglich oder drehbeweglich geführt ist,
- einen in der Fluidleitung angeordneten ersten Durchgangskörper, welcher statisch innerhalb des Gehäuses befestigt ist und welcher zumindest eine statische Durchgangsöffnung zur Durchleitung des Fluides von dem Fluideinlass zu dem Fluidauslass aufweist,
- einen zweiten Durchgangskörper, welcher über den Kolben und/oder über die Antriebswelle innerhalb des ersten Durchgangskörpers axial- und drehbeweglich oder drehbeweglich geführt ist und welcher zur Durchleitung des Fluides von dem Fluideinlass zu dem Fluidauslass zumindest eine dynamische Durchgangsöffnung aufweist.

Der Kolben und der zweite Durchgangskörper sind an der Antriebswelle des Ventilsystems gekoppelt. Zudem ist der zweite Durchgangskörper mittels des Kolbens und/oder der Antriebswelle derart axial verschoben und gedreht oder gedreht zu dem ersten Durchgangskörper anordenbar, dass in einer Durchlassstellung des zweiten Durchgangskörpers die zumindest eine dynamische Durchgangsöffnung des zweiten Durchgangskörpers zur Durchleitung des Fluides zumindest teilweise fluchtend zu der zumindest einen statischen Durchgangsöffnung des ersten Durchgangskörpers angeordnet ist, und dass in einer Sperrstellung des zweiten Durchgangskörpers der zweite Durchgangskörper die zumindest eine statische Durchgangsöffnung des ersten Durchgangskörpers zur Sperrung der Durchleitung des Fluides verschließt.

Mit anderen Worten kann ein Ventil für eine Fluidleitung, die für hohen Druck ausgerichtet ist, bereitgestellt werden, das die Durchleitung des Fluides einerseits mittels eines Kolbens und andererseits mittels eines beweglichen zweiten Durchgangskörpers zulassen oder unterbrechen kann. Dabei können sowohl der Kolben als auch der zweite Durchgangskörper axial- und drehbeweglich oder drehbeweglich geführt werden.

Das Gehäuse des Ventils kann ein Teil der Fluidleitung oder einer Hochdruckfluidleitung sein. Das Gehäuse kann generell ein Rohr, eine Leitung oder einen Abschnitt einer Kanalisation oder eines Kanals bezeichnen. Das Gehäuse kann einteilig ausgebildet sein. Das Gehäuse ist mit einem Fluideinlass und einem Fluidauslass vorgesehen, wobei der Fluideinlass in Strömungsrichtung des Fluides vor dem Fluidauslass angeordnet ist. Das Gehäuse weist ferner eine Fluidleitung auf, welche ein Volumen im Gehäuse, einen Abschnitt oder einen Bereich des Gehäuses, durch welches das Fluid leitbar ist, bezeichnen kann. Im Gehäuse kann eine Antriebswelle eines Ventilsystems vorgesehen sein, die axial- und drehbeweglich oder drehbeweglich gelagert ist. Alternativ kann die Antriebswelle eines Ventilsystems außerhalb vom Gehäuse angeordnet sein.

Der Fluideinlass kann eine Öffnung in das Gehäuse bezeichnen. Der Fluideinlass kann vorzugsweise einen runden Querschnitt aufweisen. Der Fluideinlass kann einen größeren Querschnitt aufweisen als der Fluidauslass des Gehäuses.

Das Gehäuse selbst kann einen runden und/oder ovalen Querschnitt aufweisen. Die Geometrie des Gehäuses kann frei gewählt werden. Die Fluidleitung des Gehäuses kann derart ausgebildet sein, dass sie für einen Durchfluss des Fluides ausgerichtet ist. Dabei können fluiddynamische vorteilhafte Geometrien, beispielsweise mit geraden und/oder abgerundeten Konturen, bevorzugt werden.

Im Kontext der vorliegenden Offenbarung kann der Begriff axial eine Richtung oder Orientierung bezeichnen, die entlang einer Längsachse des Gehäuses läuft bzw. verläuft. Dabei kann die Längsachse durch den Fluideinlass und den Fluidauslass des Gehäuses verlaufen. Eine Drehbewegung kann im Kontext der vorliegenden Offenbarung eine tangentiale Bewegung um die Längsachse des Gehäuses bezeichnen. Mit anderen Worten kann eine axiale Bewegung eine Bewegung parallel oder koaxial der Längsachse des Gehäuses und eine Drehbewegung eine Umdrehung um die Längsachse bezeichnen. Eine Axial- und Drehbewegung kann einer Schraubbewegung entsprechen.

Das Ventil ist ferner mit einem Kolben versehen. Der Kolben kann vorzugsweise dazu ausgeführt sein, den Fluidauslass vollständig zu verschließen. Ist der Fluidauslass durch den Kolben geschlossen bzw. abgedichtet geschlossen, so befindet sich der Kolben in einer Schließstellung. Die Schließstellung kann dabei eine Position und/oder eine Stellung des Kolbens bezeichnen, in welcher der Fluidauslass verschlossen ist. Zum Verschließen des Fluidauslasses und insbesondere zum abdichtenden Verschließen des Fluidauslasses weist der Kolben eine Dichtfläche auf. Der Kolben kann von der Schließstellung über die Antriebswelle axial- und drehbeweglich oder drehbeweglich führbar sein, um den Fluidauslass freizugeben. Durch eine Axial- und Drehbewegung oder Drehbewegung des Kolbens kann der Durchfluss oder Volumenstrom des Fluides geändert werden. Mit anderen Worten können Druckunterschiede in der Fluidleitung des Gehäuses durch Bewegungen des Kolbens schnell und sehr präzise gesteuert und/oder geregelt werden. Der Kolben ist direkt oder indirekt mit der Antriebswelle gekoppelt. Der Kolben kann beispielsweise über einen Antriebskolben mit der Antriebswelle gekoppelt sein. Der Kolben und die Antriebswelle können eine einzige Baueinheit darstellen.

Im Kontext der vorliegenden Offenbarung kann der Kolben als Dichtkolben oder als Kolbenstange bezeichnet werden. Der Kolben kann einteilig oder zweiteilig mit einem Antriebskolben des Antriebs ausgebildet sein.

Weiterhin ist ein zweiter Durchgangskörper mit der Antriebswelle indirekt oder direkt gekoppelt. Der zweite Durchganskörper kann am Kolben befestigt sein. Der zweite Durchgangskörper ist innerhalb des ersten Durchgangskörpers beweglich angeordnet, und kann daher als innerer Durchgangskörper bezeichnet werden.

Der erste Durchgangskörper kann als statischer Durchgangskörper bezeichnet werden, denn im Gegensatz zum zweiten Durchgangskörper ist der erste Durchgangskörper relativ zum Kolben und/oder relativ zum Gehäuse des Ventils nicht beweglich angeordnet. Der erste Durchgangskörper kann am Gehäuse befestigt sein. Der erste Durchgangskörper kann derart am Gehäuse befestigt sein, dass er austauschbar sein kann. Der erste Durchgangskörper kann einen Bauteil des Ventils darstellen, durch welchen das Fluid durchströmen kann, vorzugsweise mit einem definierten maximalen Durchfluss durchströmen kann.

Der erste Durchgangskörper weist zumindest eine statische Durchgangsöffnung auf. Die zumindest eine statische Durchgangsöffnung kann dazu dienen, das Fluid von einer Seite des Durchgangsköpers zu einer anderen Seite des Durchgangskörpers durchströmen zu lassen. Im Grunde genommen kann die zumindest eine statische Durchgangsöffnung das Durchströmen des Fluides durch den ersten Durchgangskörper ermöglichen. In Strömungsrichtung des Fluides kann ein Bereich vor dem ersten Durchgangskörper, d. h., vor der zumindest einen statischen Durchgangsöffnung, als außerhalb des ersten Durchgangskörpers bezeichnet werden. In Strömungsrichtung des Fluides kann ein Bereich nach dem ersten Durchgangskörper, d. h., nach der zumindest einen statischen Durchgangsöffnung, als innerhalb des ersten Durchgangskörpers bezeichnet werden.

Die Begriffe Durchlassstellung und Sperrstellung sind im Kontext der vorliegenden Offenbarung breit zu verstehen. Die Durchlassstellung sowie die Sperrstellung können eine Stellung, eine Lage, eine Anordnung oder eine Position des zweiten Durchgangskörpers relativ zum ersten Durchgangskörpers bezeichnen. Denn der zweite Durchgangskörper kann sich relativ zum ersten Durchgangskörper bewegen und zwar derart bewegen, dass sich die zumindest eine dynamische Durchgangsöffnung des zweiten Durchgangskörpers relativ zur zumindest einen statischen Durchgangsöffnung des ersten Durchgangskörpers bewegen kann.

In der Durchlassstellung kann der zweite Durchgangskörper derart positioniert sein, dass die zumindest eine dynamische Durchgangsöffnung des zweiten Durchgangskörpers zumindest teilweise fluchtend zur statischen Durchgangsöffnung des ersten Durchgangskörpers angeordnet ist. Mit anderen Worten kann die Durchlassstellung eine Stellung des zweiten Durchgangskörpers bezeichnen, in welcher das Fluid sowohl durch den ersten als auch den zweiten Durchgangskörper durchströmen kann.

In der Sperrstellung kann der zweite Durchgangskörper derart positioniert sein, dass kein Fluid bzw. möglichst kein Fluid zwischen dem ersten und den zweiten Durchgangskörper durchströmen kann. In der Sperrstellung kann der zweite Durchgangskörper derart positioniert sein, dass die dynamische Durchgangsöffnung des zweiten Durchgangskörpers nicht fluchtend mit der statischen Durchgangsöffnung des ersten Durchgangskörpers ist. In der Sperrstellung verschließt die Außenwandung des zweiten Durchgangskörpers die zumindest eine statische Durchgangsöffnung des ersten Durchgangskörpers.

Es sei bemerkt, dass der zweite Durchgangskörper vorzugsweise derart beweglich ist, dass ein Übergang von der Sperrstellung zur Durchlassstellung und umgekehrt stufenlos erfolgen kann.

Der zweite Durchgangsköper kann als Durchflussregler ausgebildet sein. Der zweite Durchgangskörper kann als dynamischer Durchgangskörper bezeichnet werden, denn dieser kann sich relativ zum ersten Durchgangskörper und/oder relativ zum Gehäuse bewegen, insbesondere axial- und drehbeweglich oder drehbeweglich bewegen. Mit einer Bewegung des zweiten Durchgangskörpers kann sich auch die dynamische Durchgangsöffnung relativ zum ersten Durchgangskörper bewegen.

Über eine Bewegung der dynamischen Durchgangsöffnung, d. h., des zweiten Durchgangskörpers. kann ein Durchfluss zwischen Fluideinlass und Fluidauslass des Ventils besser, d. h., schnell und präzise, geregelt, gesteuert und/oder geändert werden.

Der Begriff Durchgangsöffnung ist im Kontext der vorliegenden Offenbarung, sei es bei einer dynamischen oder bei einer statischen Durchgangsöffnung, breit zu verstehen. Es kann sich dabei um Löcher, Bohrungen und/oder Einschnitte handeln. Allgemein ist eine Durchgangsöffnung dahingehend zu verstehen, dass das Fluid durch den ersten - und entsprechend den zweiten - Durchgangskörper über dessen zumindest eine Durchgangsöffnung durchdrängen oder durchströmen kann.

Der Begriff Fluid ist im Kontext der vorliegenden Offenbarung breit zu verstehen. Es kann sich dabei sowohl um Flüssigkeiten als auch um Gase handeln. Beispiele von Fluiden können Gase, Erdgase, Methan, Öl und Wasser sein.

Durch ein solches Ventil kann in vorteilhafter Weise der Volumenstrom des Fluides in einer Fluidleitung präzise, schnell und effizient geregelt, reguliert und/oder gesteuert werden. Insbesondere kann der Volumenstrom durch die Verwendung zweier zueinander wirkenden Durchgangskörper variabel anpassbar sein. Dadurch kann die Zuverlässigkeit des Ventils erhöht werden. Ein solches Ventil kann demnach in kritischen Umgebungen, wie im Kraftwerksbereich oder im Hochdruckturbinenbereich, eingesetzt werden, wobei kritische Umgebungen auch solche Umgebungen bezeichnen können, die einer gewisse Explosionsgefahr ausgesetzt sind.

Durch die durch das Ventil ermöglichte Regulierung des Volumenstroms mittels axial- und Drehbewegung oder Drehbewegung, insbesondere mittels Schraubbewegung, können sich sehr kurze Verfahrwege des Kolbens und/oder einer Antriebswelle zum Öffnen und Schließen realisieren lassen. So kann zum Beispiel der Verfahrweg kleiner als 20 Grad, 30 Grad, oder kleiner als 40 Grad für eine 0 bis 100 % Regelgröße des Ventils realisiert werden. Dadurch können extrem schnelle Reaktionszeiten zum Übergang von einer Öffnungsstellung zu einer Schließstellung und umgekehrt oder von einer Durchlassstellung zu einer Sperrstellung und umgekehrt, zum Beispiel von bis zu 0,5 Sekunden oder weniger für eine Notschließung/-öffnung, erreicht werden. Die Reaktionszeit kann von der Ventilgröße abhängen.

Durch den kurzen Bewegungsablauf entfällt die Notwendigkeit eines langen axialen Verfahrwegs des Kolbens und/oder der Antriebswelle. Demnach ist es möglich, die Baulänge des Ventils, bzw. des Ventils zusammen mit dem Antrieb, im Vergleich zu herkömmlichen Ventilen für Fluidleitungen oder Hochdruckfluidleitungen deutlich zu verkürzen.

Ein weiterer großer Vorteil des vorliegend beschriebenen Ventils kann darin bestehen, dass der Bedarf an Betriebsmitteln in Form von Hydrauliköl geringgehalten werden kann. Insbesondere kann der Bedarf an Betriebsmitteln in Form von Hydrauliköl weniger als 75 % gegenüber bekannten Ventilantrieben betragen.

Durch ein solches Ventil kann zudem die benötigte Kraft für die Schließung und die Öffnung des Ventils gering bzw. geringer als bei bekannten Ventilen sein. Insbesondere kann durch die tangentiale Drehbewegung, insbesondere durch die tangentiale Schraubbewegung des Kolbens und/oder des zweiten Durchgangskörpers, die notwendige Kraft zum Öffnen und Schließen des Ventils im Vergleich zu bekannten Ventilen erheblich reduziert werden. Dadurch können geringe Betriebskosten durch geringes Ölvolumen, geringen Wartungsaufwand und entsprechend niedrige Energiekosten anfallen. Dadurch kann entsprechend ein langlebiges, robustes und kostengünstiges Ventil bereitgestellt werden.

Gemäß einer Ausführungsform des Ventils ist der erste Durchgangskörper zylindrisch ausgeführt. Zudem weist der erste Durchgangskörper eine Vielzahl von statischen Durchgangsöffnungen auf. Ferner ist der zweite Durchgangskörper zylindrisch ausgeführt, weist eine Vielzahl von dynamischen Durchgangsöffnungen auf und liegt im Inneren des ersten Durchgangskörpers am ersten Durchgangskörper axial- und drehbeweglich oder drehbeweglich an.

Der erste Durchgangskörper kann als hohler Zylinder mit einem inneren und einem äußeren Radius ausgeführt sein. Der zweite Durchgangskörper kann als hohler Zylinder mit einem inneren und einem äußeren Radius ausgeführt sein. Dabei kann der innere Radius des ersten Durchgangskörpers dem äußeren Radius des zweiten Durchgangskörpers entsprechen. Mit anderen Worten können die zwei Durchgangskörper ineinander liegen, wobei der zweite Durchgangskörper im Inneren des ersten Durchgangskörpers anliegt.

Der erste Durchgangskörper kann eine Vielzahl von statischen Durchgangsöffnungen aufweisen, die beispielsweise gleichmäßig am ersten Durchgangskörper verteilt sind.

Alternativ sind die statischen Durchgangsöffnungen des ersten Durchgangskörpers lediglich in einem Abschnitt des ersten Durchgangskörpers verteilt. In diesem Abschnitt können aber die Durchgangsöffnungen wiederum gleichmäßig verteilt sein. Weiter alternativ können die statischen Durchgangsöffnungen ungleichmäßig am ersten Durchgangskörper angeordnet sein.

Alternativ oder zusätzlich sind die dynamischen Durchgangsöffnungen des zweiten Durchgangskörpers in einem Abschnitt des zweiten Durchgangskörpers verteilt. In diesem Abschnitt können aber die dynamischen Durchgangsöffnungen wiederum gleichmäßig verteilt sein. Weiter alternativ oder zusätzlich können die dynamischen Durchgangsöffnungen ungleichmäßig am zweiten Durchgangskörper angeordnet sein.

Grundsätzlich kann es sich als vorteilhaft erweisen, dass die dynamischen Durchgangsöffnungen des zweiten Durchgangskörpers derart angeordnet sind, dass sie in der Durchlassstellung vollständig fluchtend mit den statischen Durchgangsöffnungen des ersten Durchgangskörpers sind. Die dynamischen Durchgangsöffnungen können zudem derart angeordnet sein, dass bei der Sperrstellung des zweiten Durchgangskörpers keine einzige dynamische Durchgangsöffnung der Vielzahl der dynamischen Durchgangsöffnungen fluchtend mit einer statischen Durchgangsöffnung des ersten Durchgangskörpers angeordnet ist.

Die genaue Anordnung der Vielzahl von statischen und/oder dynamischen Durchgangsöffnungen kann mit dem Strömungsverhalten für die jeweilige Anwendung des Ventils definiert werden. Insbesondere kann die Anordnung der statischen und/oder dynamischen Durchgangsöffnungen vom KVS-Wert des Ventils abhängen.

Die Vielzahl von statischen Durchgangsöffnungen und/oder von dynamischen Durchgangsöffnungen kann derart ausgewährt sein, dass die zusammensummierten Querschnitte der Durchgangsöffnungen einen vordefinierten Volumenstrom des Fluides ermöglichten.

Gemäß einer Ausführungsform des Ventils liegt die Außenwandung des zweiten Durchgangskörpers abdichtend an der Innenwandung des ersten Durchgangskörpers beweglich an.

Der Begriff abdichtend ist vorliegend breit zu verstehen. Abdichtend kann vorliegend dahingehend verstanden werden, dass zwischen dem ersten und dem zweiten Durchgangskörper möglichst kein Fluid durchfließen kann. Eine relative Bewegung des zweiten Durchgangskörpers zum ersten Durchgangskörper soll durch ein abdichtendes Anliegen jedoch nicht erschwert werden. Dadurch kann die Regelung des Volumenstroms des Fluides weiter verbessert werden.

Gemäß einer Ausführungsform des Ventils weist die zumindest eine statische Durchgangsöffnung eine längliche, eine spiralförmige, eine ovale, eine eckige und/oder eine kreisrunde Form auf. Zudem weist die zumindest eine dynamische Durchgangsöffnung eine im Vergleich zu der zumindest einen statischen Durchgangsöffnung gleiche Form auf.

Bei der Form der zumindest einen statischen Durchgangsöffnung kann es sich um deren Querschnitt an der Außenwandung des ersten Durchgangskörpers handeln. Die zumindest eine Durchgangsöffnung kann über die Dicke des ersten Durchgangskörpers einen konstanten Querschnitt haben. Alternativ kann die zumindest eine statische Durchgangsöffnung über die Dicke des ersten Durchgangskörpers einen variablen Querschnitt haben. Bei der Dicke des ersten Durchgangskörpers oder des zweiten Durchgangskörpers kann es sich um den Abstand zwischen der jeweiligen Außenwandung zur jeweiligen Innenwandung handeln. Die zumindest eine dynamische Durchgangsöffnung kann die gleiche Form annehmen wie die der zumindest einen statischen Durchgangsöffnung.

Dadurch können bei der Durchlassstellung eine größere Durchströmung bzw. ein größerer Volumenstrom gewährleistet werden.

Gemäß einer Ausführungsform des Ventils nimmt die Querschnittsfläche der zumindest einen statischen Durchgangsöffnung von der Außenwandung des ersten Durchgangskörpers zu der Innenwandung des ersten Durchgangskörpers hin ab, insbesondere gleichmäßig ab.

Dadurch kann der Durchfluss des Fluides über den ersten Durchgangskörper weiter reduziert werden.

Gemäß einer Ausführungsform des Ventils verläuft bzw. verlaufen die zumindest eine statische Durchgangsöffnung und/oder die zumindest eine dynamische Durchgangsöffnung geneigt zu der Drehachse des Kolbens.

Insbesondere kann die zumindest eine statische Durchgangsöffnung und/oder die zumindest eine dynamische Durchgangsöffnung geneigt in Richtung des Durchflusses bzw. der Strömungsrichtung sein. Die durch den Volumenstrom erzeugte Kraft auf den ersten und/oder den zweiten Durchgangskörper kann dadurch reduziert und die Robustheit des Ventils weiter erhöht werden.

Ein zweiter Aspekt der vorliegenden Offenbarung betrifft ein Ventilsystem für eine Fluidleitung, insbesondere eine Hochdruckfluidleitung zur Regelung einer Durchleitung eines Fluides. Das Ventilsystem weist ein Ventil, wie voranstehend und nachfolgend beschrieben, auf und einen Antrieb mit einer axial- und drehbeweglich oder drehbeweglich gelagerten Antriebswelle. Der Kolben des Ventils ist zumindest indirekt mit der Antriebswelle des Antriebs gekoppelt.

Gemäß einer Ausführungsform des Ventilsystems weist der Antrieb zudem wenigstens ein Federelement auf. Das wenigstens eine Federelement des Antriebs ist innerhalb des Gehäuses derart angeordnet, dass es bei einer Bewegung des Kolbens des Ventils und eines Antriebskolbens des Antriebs in Richtung der Öffnungsstellung vorspannbar ist, um eine Kraft auf den Kolben des Ventils und auf den Antriebskolben des Antriebs in Richtung der Schließstellung des Kolbens auszuüben. Dadurch kann insbesondere die Sicherheit bei der Verwendung des Ventils erhöht werden, denn dadurch kann bei Systemausfall und Druckverlust sich das Ventil selbsttätig schließen.

Beim Federelement kann es sich um eine Feder oder mehrere Federn handeln. Das Federelement kann zylinderförmig sein. Das Federelement kann beispielweise um die Antriebswelle des Antriebs herum angeordnet sein. Das Federelement kann in der Regel kleiner als bei herkömmlichen Ventilen sein, da der Kolben aufgrund seiner Drehbewegung kürzere Verfahrwege als bei herkömmlichen Ventilen hinterlegen muss.

Beim Vorsehen eines Federelements kann von einem einfachwirkenden Antrieb die Rede sein. Bei einer solchen Antriebsvariante kann nur einer der beiden Verfahrwege des Kolbens mittels einer durch das Steuerfluid erzeugten Druckbelastung realisiert werden. Der entgegengesetzte Verfahrweg des Kolbens kann mittels Federdruck, d. h., mittels des Federelements, ermöglicht werden. Mit anderen Worten kann der Antrieb in eine Richtung mittels des Steuerfluides erzeugten Druckbelastung gegen ein verbautes Federelement verfahren und eine entsprechende Federkraft aufbauen. Beim Verfahren in die entgegengesetzte Richtung kann der hydraulische Druck in Bezug auf das Steuerfluid reduziert werden, und die Federkraft kann sich in Richtung der schwindenden Druckbelastung abbauen.

Gemäß einer Ausführungsform des Ventilsystems sind zum Antrieb der Antriebswelle, insbesondere des Kolbens des Ventils über die Antriebswelle, Anschlüsse, insbesondere Fluidanschlüsse, vorgesehen. Bei einer Ausführungsform, in welcher der Antrieb des Ventilsystems im Gehäuse des Ventils angeordnet ist, können die Anschlüsse in dem Gehäuse angeordnet sein.

Über solche Anschlüsse kann die Antriebswelle, insbesondere den Kolben über die Antriebswelle, zumindest indirekt angetrieben oder gesteuert werden. Bei den Anschlüssen kann es sich um Hydraulik-Anschlüsse handeln.

Bei einer solchen Ausführungsform kann ein Federelement vorgesehen sein. Alternativ kann auf ein Federelement verzichtet werden. Wird auf ein Federelement verzichtet, so kann von einem doppelwirkenden Antrieb die Rede sein. Bei einem doppeltwirkenden Antrieb können alle Verfahrwege durch eine mittels Steuerfluid erzeugte Druckbelastung realisiert werden.

Gemäß einer Ausführungsform des Ventilsystems ist der Antrieb des Ventilsystems zum axial- und drehbeweglichen oder drehbeweglichen Antreiben der Antriebswelle innerhalb des Gehäuses des Ventils angeordnet.

Der Antrieb kann insbesondere axial im Gehäuse des Ventils angeordnet sein. Dadurch kann ein Gelenk vermieden werden. Durch den reduzierten Kraftaufwand, Entfall der Umlenkmechanik und Art der Durchflussregelung, kann das gesamte Ventilsystem kleiner ausfallen und kann somit Platz im Ventil finden.

Durch ein solches Ventilsystem können vom Antrieb ausschließlich Axial- und keine Radialkräfte an das Gehäuse des Ventils übertragen werden. Dadurch kann ein robustes Ventil, bzw. Ventilsystem, bereitgestellt werden.

Durch die Aufnahme des Antriebs in das Gehäuse des Ventils können notwendige Wartungsöffnungen, welche ein hohes Risiko für Leckage mit sich bringen können, entfallen oder zumindest reduziert werden. Dadurch kann ein hoher Dichtungs- und Kontrollaufwand entfallen.

Gemäß einer Ausführungsform des Ventilsystems weist der Antrieb einen Antriebskolben auf, welcher zumindest indirekt mit dem Kolben des Ventils gekoppelt ist. Der Antriebskolben und die Antriebswelle des Antriebs weisen jeweils ein Steilgewinde auf, welche mit Rechts-Linkssteigung, vorzugsweise mit Rechtssteigung oder Linkssteigung, versehen sind.

Dadurch kann eine Steilgewindepaarung bereitgestellt werden, wodurch wiederum eine Drehbewegung der Antriebswelle bei der axialen Bewegung des Kolbens erzeugt werden kann. Demnach kann die Antriebswelle gleichzeitig eine Radial- und eine Axialbewegung durchführen.

Gemäß einer Ausführungsform des Ventilsystems ist wenigstens eine Hydraulikvorrichtung innerhalb des Gehäuses des Ventils derart angeordnet, dass durch sie der Kolben des Ventils zwischen der Schließstellung und der Öffnungsstellung hin- und her bewegbar ist.

Die Hydraulikvorrichtung kann bei einer Bewegung des Kolbens in Richtung der Schließstellung Kraft speichern oder aufnehmen, um eine Kraft auf den Kolben in der Schließstellung des Kolbens in Richtung der Öffnungsstellung des Kolbens auszuüben.

Mit anderen Worten kann die Hydraulikvorrichtung dafür sorgen, dass alle Verfahrwege des Kolbens mittels durch Steuerfluid erzeugter Druckbelastung realisiert werden können. Der große Vorteil einer solchen Ausführungsform ist die deutlich kleinere Baugröße im Verhältnis zu einem einfachwirkenden Antrieb, d. h., zu einem Antrieb, bei welchem nicht alle Verfahrwege des Kolbens mittels durch Steuerfluid erzeugter Druckbelastung realisiert werden.

Gemäß einer Ausführungsform des Ventilsystems weist das Ventilsystem weiter eine Steuereinheit auf. Die Steuereinheit ist dazu eingerichtet, die Antriebswelle, insbesondere den Antrieb des Ventilsystems, zu steuern, insbesondere zumindest indirekt zu steuern, um den Kolben des Ventils, d. h. den Dichtkolben, zwischen einer Öffnungsstellung und einer Schließstellung, insbesondere stufenlos, zu bewegen und den zweiten Durchgangskörper des Ventils zwischen einer Durchlassstellung und einer Sperrstellung, insbesondere stufenlos, zu bewegen.

Der Begriff stufenlos ist im Kontext der vorliegenden Offenbarung breit zu verstehen. Stufenlos kann als kontinuierlich, stätig und/oder nicht-diskret verstanden werden.

Die Steuereinheit kann beispielsweise außerhalb des Gehäuses angeordnet sein. Funktions-, Steuer- und Sensorleitungen können vom innenliegenden Antrieb durch das Gehäuse des Ventils geführt werden, insbesondere zur Steuereinheit geführt werden. Die Anschlussverbindungen können vorzugsweise in das Gehäuse adaptiert werden.

Sämtliche Vorteile, die zu dem Ventil gemäß dem ersten Aspekt der Erfindung aufgeführt worden sind, gelten gleichermaßen auch für das Ventilsystem für eine Fluidleitung, insbesondere für eine Hochdruckfluidleitung, gemäß dem zweiten Aspekt der Erfindung.

Ein dritter Aspekt der vorliegenden Offenbarung betrifft ein Verfahren zum Betreiben eines Ventils, insbesondere eines Ventilsystems, für eine Fluidleitung wie voranstehend und nachfolgend beschrieben, aufweisend folgende Schritte:
- ein Fluid wird mit einer definierten Strömung in das Gehäuse des Ventils durch einen Fluideinlass durchgeleitet,
- das Fluid wird zu einer ersten Druckzone hin durchgeleitet, wobei die erste Druckzone in Strömungsrichtung vor dem ersten Durchgangskörper im Gehäuse angeordnet ist,
- der Kolben des Ventils wird axial- und drehbeweglich oder drehbeweglich mittels eines Antriebs angetrieben,
- über den Kolben des Ventils und/oder über eine Antriebswelle eines Ventilsystems, insbesondere eines Ventilsystems gemäß dem zweiten Aspekt der Erfindung, insbesondere zumindest indirekt über den Kolben des Ventils, wird der zweite Durchgangskörper axial- und drehbeweglich oder drehbeweglich geführt, um einen ersten Durchfluss, mit welchem das Fluid von der ersten Druckzone zu einer zweiten Druckzone hingeleitet wird, zu steuern, insbesondere zu reduzieren, wobei die zweite Druckzone in Strömungsrichtung nach der zumindest einen dynamischen Durchgangsöffnung des zweiten Durchgangskörpers angeordnet ist,
- der Kolben des Ventils wird axial- und drehbeweglich oder drehbeweglich geführt, insbesondere über die Antriebswelle des Ventilsystems, um einen zweiten Durchfluss, mit welchem das Fluid von der zweiten Druckzone durch den Fluidauslass des Gehäuses geleitet wird, zu steuern,

wobei bei der Führung des zweiten Durchgangskörpers eine relative Bewegung der zumindest einen dynamischen Durchgangsöffnung zu der zumindest einen statischen Durchgangsöffnung hin derart stattfindet, dass ein überlappender Bereich der zumindest einen dynamischen Durchgangsöffnung mit der zumindest einen statischen Durchgangsöffnung verkleinerbar oder vergrößerbar ist, und
wobei zwischen der ersten Druckzone und der zweiten Druckzone ein Druckunterschied herrscht.

Mit anderen Worten kann das Ventil derart betrieben werden, dass über den zweiten Durchgangskörper und/oder über den Kolben des Ventils, d. h. die Kolbenstange, der Volumenstrom des Fluides definiert, geregelt oder gesteuert werden kann.

Der überlappende Bereich kann in der Regel der Bereich bezeichnen in welchem die entsprechende statische Durchgangsöffnung fluchtend mit der entsprechenden dynamischen Durchgangsöffnung ist.

Bei der ersten Druckzone und bei der zweiten Druckzone kann es sich um Zonen handeln, in denen der Fluiddruck reguliert werden soll oder kann. Allgemein kann die erste Druckzone ein Volumen oder einen Bereich im Gehäuse oder in der Fluidleitung bezeichnen, in welchem einen ersten Fluiddruck herrscht, welcher sich von einem zweiten Fluiddruck in Strömungsrichtung nach dem Ventil, bzw. nach dem zweiten Durchgangskörper und/oder nach dem Fluidauslass des Ventils, unterscheiden kann. In der ersten Druckzone kann einen ersten Fluiddruck herrschen. In der zweiten Druckzone kann einen zweiten Fluiddruck herrschen. Es kann sich vorteilhaft erweisen den ersten und den zweiten Fluiddruck zu regeln, zu überwachen und/oder zu erfassen. Hierfür können beispielsweise Drucksensoren vorgesehen werden.

Durch ein solches Verfahren kann der Volumenstrom in einer Fluidleitung und insbesondere in einer Hochdruckfluidleitung präzise und effizient reguliert werden. Durch ein solches Verfahren kann ein Ventil für eine Fluidleitung sicherer betrieben werden.

Sämtliche Vorteile, die zu dem Ventil gemäß dem ersten Aspekt der Erfindung aufgeführt worden sind, gelten gleichermaßen auch für das Verfahren zum Betreiben eines Ventils für eine Fluidleitung gemäß dem dritten Aspekt der Erfindung.

Der Druckunterschied zwischen den voranstehend beschriebenen Zonen kann mittels eines Sensors überwacht werden. In Abhängigkeit des Druckunterschieds kann das Ventil entsprechend gesteuert werden, d. h., einen stufenlosen Übergang von einer Schließstellung zu einer Öffnungsstellung oder umgekehrt veranlassen und/oder einen stufenlosen Übergang von einer Durchlassstellung zu einer Sperrstellung oder umgekehrt veranlassen.

Gemäß einer Ausführungsform des Verfahrens wird der Druckunterschied zwischen der ersten Druckzone und der zweiten Druckzone durch die Steuerung des zweiten Durchgangskörpers und/oder des Kolbens des Ventils geregelt.

Gemäß einer Ausführungsform des Verfahrens werden der zweite Durchgangskörper und der Kolben des Ventils über die Antriebswelle eines/des Ventilsystems synchron axial- und drehbeweglich oder drehbeweglich geführt.

Der Begriff synchron ist im Kontext der vorliegenden Offenbarung breit zu verstehen. Synchron kann im Kontext der vorliegenden Offenbarung dahingehend verstanden werden, dass der Kolben und der zweite Durchgangskörper mit der gleichen Frequenz betrieben werden. Eine Schließstellung des Kolbens muss jedoch nicht zwangsläufig gleichzeitig mit der Sperrstellung des zweiten Durchgangskörpers erfolgen. Das Erreichen der Schließstellung und der Sperrstellung kann zeitlich leicht versetzt erfolgen. Gleichwohl kann das Erreichen der Öffnungsstellung zeitlich versetzt mit dem Erreichen der Durchlassstellung erfolgen.

Nachdem sowohl der zweite Durchgangskörper als auch der Kolben des Ventils mit der Antriebswelle gekoppelt, sei es direkt oder indirekt, sein können, können beide Elemente synchron zueinander arbeiten. Mit anderen Worten entspricht eine Axialbewegung des Kolbens des Ventils in der Regel einer entsprechenden Axialbewegung des zweiten Durchgangskörpers. Eine Drehbewegung des Kolbens entspricht in der Regel derselben Drehbewegung des zweiten Durchgangskörpers.

Gemäß einer Ausführungsform des Verfahrens wird der Kolben des Ventils von der Öffnungsstellung zum Freigeben des Fluidauslasses zur Schließstellung zur Sperrung des Fluidauslasses und umgekehrt geführt. Alternativ oder zusätzlich wird der zweite Durchgangskörper von der Durchlassstellung zu der Sperrstellung geführt.

Es kann ferner ein computerlesbares Medium vorgesehen sein, auf dem ein Computerprogrammprodukt gespeichert ist. Ein solches Computerprogrammprodukt kann Befehle umfassen, die bei einer Ausführung durch eine Rechnereinheit die Rechnereinheit veranlassen, ein Verfahren wie voranstehend gemäß dem dritten Aspekt der Erfindung beschrieben auszuführen.

Sämtliche Offenbarungen, welche voranstehend und nachfolgend in Bezug auf einen Aspekt der vorliegenden Offenbarung beschrieben sind, gelten gleichermaßen für alle weiteren Aspekte der vorliegenden Offenbarung.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein.

Im Folgenden werden Ausführungsbeispiele der Erfindung unter Bezugnahme auf die Figuren beschrieben. Es zeigen:
- Figur 1: eine schematische Perspektivdarstellung eines Ventils gemäß einem Ausführungsbeispiel,
- Figuren 2a bis 2d: schematische Schnittdarstellungen von Ventilsystemen gemäß Ausführungsbeispiele, und
- Figuren 3a bis 3d: schematische Schnittdarstellungen von Ventilsystemen gemäß Ausführungsbeispiele.

Ähnliche, ähnlich wirkende, gleiche oder gleich wirkende Elemente sind in den Figuren mit gleichen Bezugszeichen versehen. Die Figuren sind lediglich schematisch und nicht maßstabsgetreu dargestellt.

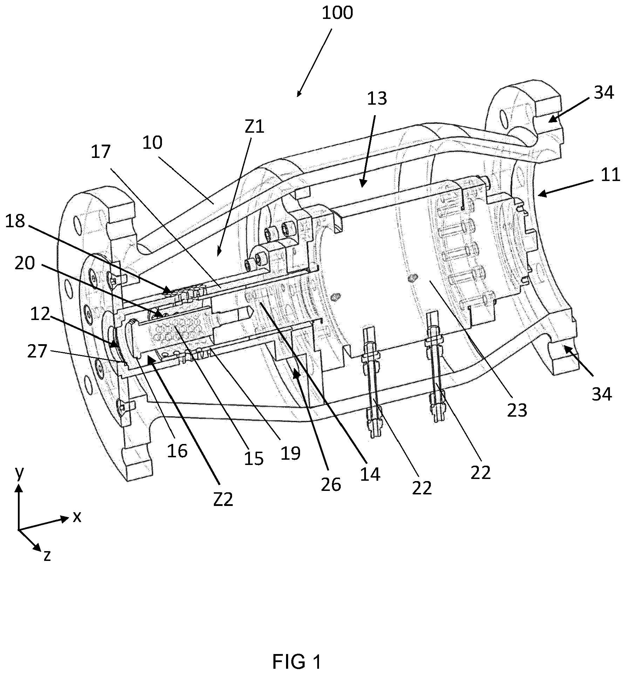

Fig. 1 zeigt eine schematische Perspektivdarstellung eines Ventils 100 gemäß einem Ausführungsbeispiel. Das Fluid kann durch den Fluideinlass 11 in das Ventil 100, insbesondere in das Gehäuse 10 des Ventils 100, einströmen. Das Gehäuse 10 des Ventils weist zudem eine Fluidleitung 13 auf, durch welche das Fluid durchströmen kann. Das Fluid kann durch den Fluidauslass 12 aus dem Gehäuse 10 bzw. aus dem Ventil 100 ausströmen. Der Fluidauslass 12 des Ventils 100 der Fig. 1 weist einen kleineren Querschnitt als der Fluideinlass 11 auf. Sowohl der Fluidauslass 12 als auch der Fluideinlass 11 der Fig. 1 haben einen runden Querschnitt. Das Gehäuse 10 des Ventils 100 der Fig. 1 ist vorwiegend zylindrisch ausgeführt. Im Gehäuse 10 des Ventils 100 sind zumindest ein erster Durchgangskörper 17, ein zweiter Durchgangskörper 19, ein Kolben 15 und ein Antriebswelle 14 angeordnet. Es sei bemerkt, dass in der vorliegenden beispielhaften Ausführungsform die Antriebswelle 14 im Gehäuse 10 des Ventils 100 angeordnet ist, weil der Antrieb 23 ebenfalls im Gehäuse des Ventils 100 angeordnet ist. Sollte bei einer alternativen Ausführungsform der Antrieb außerhalb des Gehäuses 10 des Ventils 100 angeordnet sein, so befindet sich die Antriebswelle 14 ebenfalls außerhalb des Gehäuse 10 des Ventils 100.

Sowohl der Kolben 15, auch als Kolbenstange bezeichnet, als auch der zweite Durchgangskörper 19 sind mit der Antriebswelle 14 gekoppelt. Über die Antriebswelle 14 kann der Kolben 15 in axiale Richtung hin und her bewegt werden. Gleichzeitig kann der zweite Durchgangkörper 19 ebenfalls über die Antriebswelle 14 bewegt werden, insbesondere axial hin und her bewegt werden. Die Antriebswelle 14 kann kombiniert mit dem zweiten Durchgangskörper 19 und dem Kolben 15 fixiert sein und eine einzige Baueinheit bilden. Der zweite Durchgangskörper 19 und der Kolben 15 können in Verbindung die Regel-, Schließ- und Öffnungsfunktion vorgeben.

Der Kolben 15, d. h. die Kolbenstange, kann insbesondere von einer Öffnungsstellung zu einer Schließstellung hin und her stufenlos bewegt werden. Hierfür kann der Kolben 15 eine Dichtfläche 16 aufweisen. In der Schließstellung kann die Dichtfläche 16 des Kolbens 15 formschlüssig im Fluidauslass 12 aufgenommen sein, sodass das Fluid nicht durch den Fluidauslass 12 durchströmen kann. In der Schließstellung kann die Dichtfläche 16 des Kolbens 15 an einer statischen Dichtfläche 27 des Gehäuses 10 oder des ersten Durchgangskörpers 17 anliegen. Die Abdichtung in der Schließstellung kann durch die zwei aneinander angepassten Dichtflächen 16, 27 realisiert werden. Die Dichtfläche 16 am Kolben kann als dynamische Dichtfläche 16 bezeichnet werden. Die statische Dichtfläche 27 kann sich in dem Ventilsitz, d. h., im Fluidauslass 12 befinden. Die Oberflächen der Dichtflächen können derart ausgeführt sein, dass sie verschleißminimierend zueinander abdichtend sind. Beim Schließen des Ventils 100, d. h., beim Erreichen der Schließstellung kann sich der Kolben in den Ventilsitz, d. h., in den Fluidauslass 12 drehen oder schieben und kann durch einen Schraubeneffekt eine entsprechende Schließkraft erzeugen. Die Dichtigkeit kann sich aus der Gestaltung des Ventilsitzes, d. h., des Fluidauslasses 12 und der entsprechenden Schraubenkräfte, bestimmen.

In der Öffnungsstellung ist die Dichtfläche 16 des Kolbens 15 vorzugsweise nicht im Kontakt mit dem Gehäuse 10 des Ventils 100 und/oder nicht im Kontakt mit dem ersten Durchgangskörper 17 des Ventils 100.

In der Fluidleitung 13 des Ventils 100 ist der erste Durchgangskörper 17 angeordnet und am Gehäuse 10 befestigt. Der erste Durchgangskörper 17 kann den Querschnitt des Fluidauslasses 12 vorgeben. Der erste Durchgangskörper 17 kann eine erste Druckzone Z1 abgrenzen. In Strömungsrichtung vor dem ersten Durchgangskörper 17 kann eine erste Druckzone Z1 definiert werden. Der Druck bzw. Fluiddruck in der ersten Druckzone Z1 kann mittels eines Drucksensors (hier nicht gezeigt) erfasst werden.

Anliegend am ersten Durchgangskörper 17 ist ein zweiter Durchgangskörper 19 angeordnet, welcher jedoch relativ zum ersten Durchgangskörper 17 beweglich ist, insbesondere axial- und drehbeweglich ist. Der zweite Durchgangskörper 19 kann ebenfalls eine Druckzone definieren bzw. abgrenzen. In Strömungsrichtung nach dem zweiten Durchgangskörper 19 kann eine zweite Druckzone Z2 definiert werden. In der zweiten Druckzone Z2 kann ein Drucksensor (hier nicht gezeigt) angeordnet werden, um den Druck bzw. Fluiddruck in der zweiten Druckzone Z2 zu erfassen.

Der erste Durchgangskörper 17 und der zweite Durchgangskörper 19 weisen jeweils eine Vielzahl von Durchgangsöffnungen 18, 20 auf. Über diese Durchgangsöffnungen 18, 20 kann das Fluid von der ersten Druckzone Z1 zur zweiten Druckzone Z2 hin durchströmen. Insbesondere kann das Fluid von der ersten Druckzone Z1 zur zweiten Druckzone Z2 durchströmen, wenn der zweite Durchgangskörper 19 in einer Durchlassstellung ist, d. h., wenn die dynamischen Durchgangsöffnungen 20 des zweiten Durchgangskörpers 19 zumindest teilweise flüchtig zu den statischen Durchgangsöffnungen 18 des ersten Durchgangskörpers 17 angeordnet sind. In der Schließstellung des zweiten Durchgangskörpers 19 sind die dynamischen und statischen Durchgangsöffnungen 18, 20 derart zueinander angeordnet, dass das Fluid nicht bzw. zumindest fast nicht von der ersten Druckzone Z1 zu der zweiten Druckzone Z2 strömen kann. Der Übergang von der Schließstellung des zweiten Durchgangskörpers 19 zur Durchlassstellung des zweiten Durchgangskörpers 19 und umgekehrt erfolgt in der Regel stufenlos. Der genannte Übergang kann dadurch erfolgen, dass der zweite Durchgangskörper 19 über die Antriebswelle 14 axial- und drehbeweglich oder drehbeweglich gelagert ist.

Wie es der Fig. 1 zu entnehmen ist, sind die Vielzahl der dynamischen Durchgangsöffnungen 20 des zweiten Durchgangskörpers 19 nicht gleichmäßig an der Außenwandung des zweiten Durchgangskörpers 19 angeordnet. Die dynamischen Durchgangsöffnungen 20 sind vielmehr abschnittsweise gleichmäßig verteilt. In axialer Richtung des zweiten Durchgangskörper 19 sind jedoch die dynamischen Durchgangsöffnungen gleichmäßig verteilt. Auf dem Umfang des zweiten Durchgangskörpers 19 sind Abschnitte in tangentialer Richtung frei von Durchgangsöffnungen 20.

Die statischen Durchgangsöffnungen 18 sind vorzugsweise nicht über die gesamte axiale Länge des ersten Durchgangskörpers 17 angeordnet. Vielmehr sind die statischen Durchgangsöffnungen 18 über einen definierten Abschnitt in axialer Richtung angeordnet. Im Gegensatz zum zweiten Durchgangskörper 19 weist der erste Durchgangskörper im definierten Abschnitt keine in tangentialer Richtung öffnungsfreie Bereiche auf. Die Anordnung der Durchgangsöffnung hängt dabei aber vom Anwendungszweck ab.

Im Gehäuse 10 des Ventils 100 der Fig. 1 ist weiter ein Antrieb 23 angeordnet, welcher zum axial- und drehbeweglich oder drehbeweglich Antreiben der Antriebswelle 14 eingerichtet ist. Der Antrieb 23 ist zudem axial im Gehäuse 10 angeordnet. Zum Antreiben der Antriebswelle 14 über den Antrieb sind zudem Anschlüsse 22, d.h., Fluidanschlüsse 22, im Gehäuse angeordnet. Solche Fluidanschlüsse 22 können in der Regel Hydraulik-Anschlüsse für ein Steuerfluid sein. Über einen solchen Fluidanschluss 22 kann für die Druckversorgung des Antriebs gesorgt werden.

Das Gehäuse 10 des Ventils 100 der Fig. 1 kann Teil einer Hochdruckleitung sein. Insbesondere kann das Gehäuse 10 in ein Hochdruckleitungssystem integriert werden. Hierfür kann das Gehäuse 10 Verbindungsabschnitte 34 aufweisen.

In Fig. 1 ist weiter ersichtlich, dass das Gehäuse 10 weiter eine Stützstruktur 24, beispielsweise eine Stützstruktur für den Antrieb 23, aufweist. Die Stützstruktur 24 kann auch eine Durchflussöffnung 26 bereitstellen. Die Durchflussöffnung 26 kann in Bezug auf eine Querschnittsverkleinerung auch die erste Druckzone Z1 mitabgrenzen. Der Antrieb 23 kann an der Stützstruktur 24 befestigt sein. Der erste Durchgangskörper 17 kann ebenfalls an der Stützstruktur 24 befestigt sein. Die Stützstruktur 24 kann eine Öffnung aufweisen, um hierdurch die Antriebswelle 14 anordnen zu können.

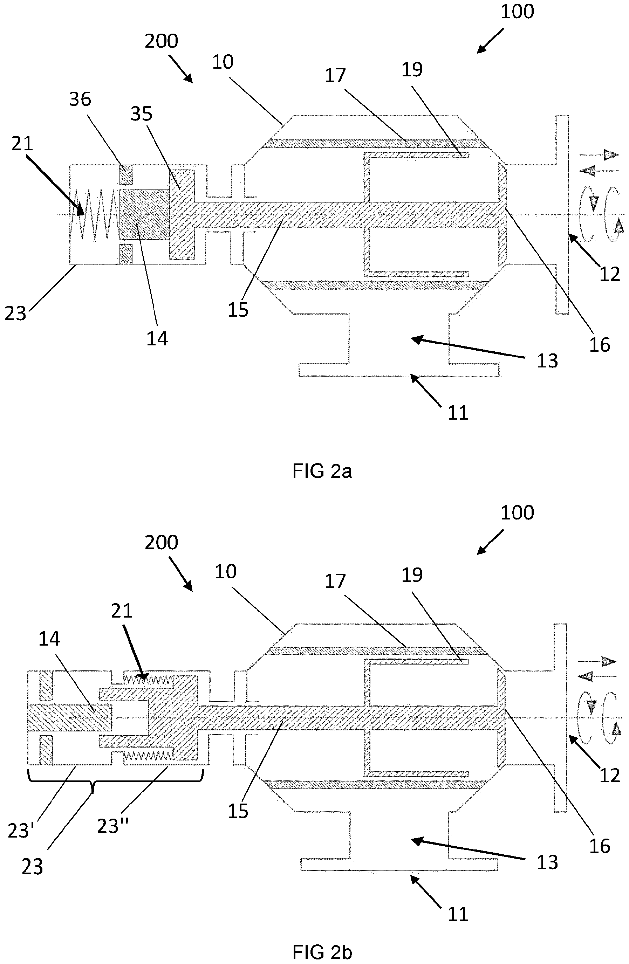

Fig. 2a bis 2d zeigen schematische Schnittdarstellungen von Ventilsystemen 200 gemäß Ausführungsbeispielen. Sofern nicht anders beschrieben, weisen die jeweiligen Ventile 100 der Fig. 2a bis 2d dieselben Elemente und/oder Komponenten wie das Ventil 100 der Fig. 1 auf.

In den Fig. 2a bis 2d ist der Antrieb 23 des Ventilsystems 200 jeweils außerhalb des Gehäuses 10 des Ventils 100 angeordnet.

Die Ventilsysteme 200 der Fig. 2a bis 2d unterscheiden sich grundsätzlich in den Antrieben 23, wobei die unterschiedlichen Antriebe 23 der Ventilsysteme 200 zu unterschiedlichen Bewegungen des Kolbens 15 des Ventils 100 führen können.

In Fig. 2a ist als Antrieb 23 ein einfachwirkender Steilgewinde-Schrauben-Antrieb vorgesehen. Mit einem solchen Antrieb 23 kann der Kolben 15 des Ventils schraubbeweglich geführt werden. Der Antrieb der Fig. 2a weist dabei ein Federelement 21 auf. Das Federelement 21 wird beim Öffnen des Ventils 100, d. h. in Richtung Öffnungsstellung, vorgespannt und baut somit eine Kraft in Richtung der Schließstellung auf.

Die Antriebswelle 14 des Antriebs 23 ist mit einem Steilgewinde vorgesehen. Zudem weist der Antrieb 23 ein Antriebsgehäuse 36 auf, welcher ebenfalls mit einem Steilgewinde vorgesehen ist. Der Kolben 15 des Ventils 100 ist dabei über einem Antriebskolben 35 mit der Antriebswelle 14 gekoppelt. Der Kolben 15 des Ventils 100 und der Antriebskolben 35 des Antriebs können einteilig ausgeführt sein. Mit einem solchen Antrieb kann der Kolben Axial- und drehbeweglich geführt werden. Die Axialbewegung und die Drehbewegung des Kolbens des Ventils 100 und/oder des Antriebskolbens 35 des Antriebs sind dabei miteinander gekoppelt.

In Fig. 2b ist als Antrieb 23 ein einfachwirkender Hub-Schrauben-Antrieb vorgesehen. Mit einem solchen Antrieb 23 kann der Kolben 15 des Ventils 100 und/oder der zweite Durchgangskörper 19, zumindest indirekt, über die Antriebswelle 14 des Antriebs Axial- und drehbeweglich geführt werden, wobei die Axialbewegung und die Drehbewegung zeitlich versetzt durchgeführt werden können.

Der Antrieb 23 der Fig. 2b kann dabei in zwei Teilantriebe 23`, 23" unterteilt werden. Der Antrieb 23 weist somit als ersten Teilantrieb 23' einen Radialantrieb und als zweiten Teilantrieb 23" einen Axialantrieb auf. Mittels des Axialantriebs 23", welches ein Federelement 21 aufweist, kann einen Antriebskolben 35 axial geführt werden. Dabei ist der Antriebskolben 35 mit dem Kolben 15 des Ventils 100 gekoppelt, vorzugsweise direkt gekoppelt. Der Axialantrieb 23" kann mit dem Radialantrieb 23' zusammenwirken, in dem eine Zahnverbindung 28 vorgesehen ist. Die Zahnverbindung 28 weist eine Verzahnung zur Radialbewegung des Antriebskolbens 35 und/oder des Kolbens 15 des Ventils 100 auf. Die Verzahnung bzw. Zahnverbindung 28 der Fig. 2b kann ebenfalls zur Axialbewegung des Antriebskolbens 35 und/oder des Kolbens 15 des Ventils 100 beitragen. Die Antriebswelle 14 der Fig. 2b weist einen Steilgewinde auf. Durch den Antrieb 23 der Fig. 2b kann die Axialbewegung und die Drehbewegung des Kolbens 15 und/oder des zweiten Durchgangskörpers 19 sowohl gleichzeitig als auch zeitlich versetzt erfolgen.

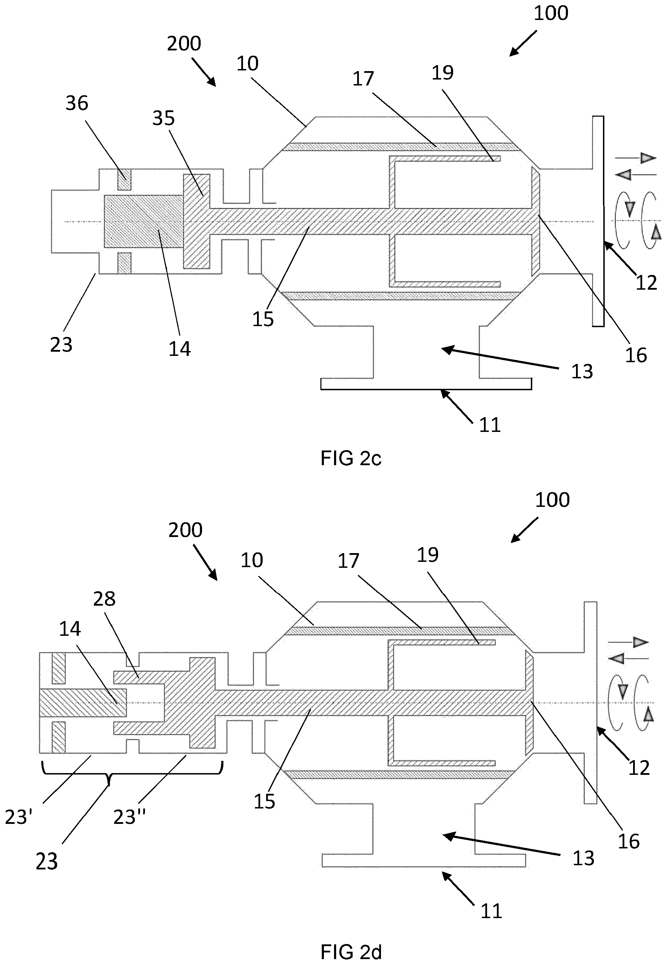

In Fig. 2c ist als Antrieb 23 ein doppeltwirkender Steilgewinde-Schrauben-Antrieb vorgesehen. Der Antrieb 23 weist dabei einen Antriebskolben 35, der mit dem Kolben 15 des Ventils 100 vorzugsweise direkt gekoppelt ist, und eine Antriebswelle 14 auf. Die Antriebswelle 14 und der Antriebskolben 35 sind dabei mit einem Steilgewinde vorgesehen. Der Antrieb 23 weist weiter ein Antriebsgehäuse 36 auf, welches ein starres Steilgewinde aufweisen kann. Im Antrieb 23 können Druckkammern vorhanden sein,

In Fig. 2d ist als Antrieb 23 ein doppeltwirkender Hub-Schrauben-Antrieb vorgesehen. Ein solcher Antrieb 23 weist kein Federelement 21, wie im Übrigen der Antrieb 23 der Fig. 2c, auf. Ähnlich wie der Antrieb der Fig. 2b, kann der Antrieb 23 der Fig. 2d in zwei Teilantriebe 23`, 23" unterteilt sein, wobei die zwei Teilantriebe 23`, 23" mittels einer Zahnverbindung 28 zusammenwirken können.

Zusammengefasst, können unterschiedliche Antriebe 23 für ein Ventilsystem 200 verwendet werden. Dabei kann zwischen zwei Kategorien von Antrieben unterscheidet werden. Bei den Antrieben 23 der Fig. 2a und 2c kann eine Axialbewegung des Kolbens 15 des Ventils 100 nicht von einer Drehbewegung des Kolbens 15 des Ventils 100 entkoppelt sein. Im Gegensatz hierzu können die Axialbewegung und die Drehbewegung des Kolbens 15 des Ventils 100 mittels einem Antrieb wie einer der Fig. 2b und 2d entkoppelt werden. D. h. es ist mit einem Antrieb 23, wie in Fig. 2b oder 2d gezeigt, möglich die Drehbewegung des Kolbens 15 des Ventils 100 und/oder des zweiten Durchgangskörpers 19 zeitlich versetzt von einer Axialbewegung des Kolbens 15 des Ventils 100 durchzuführen.

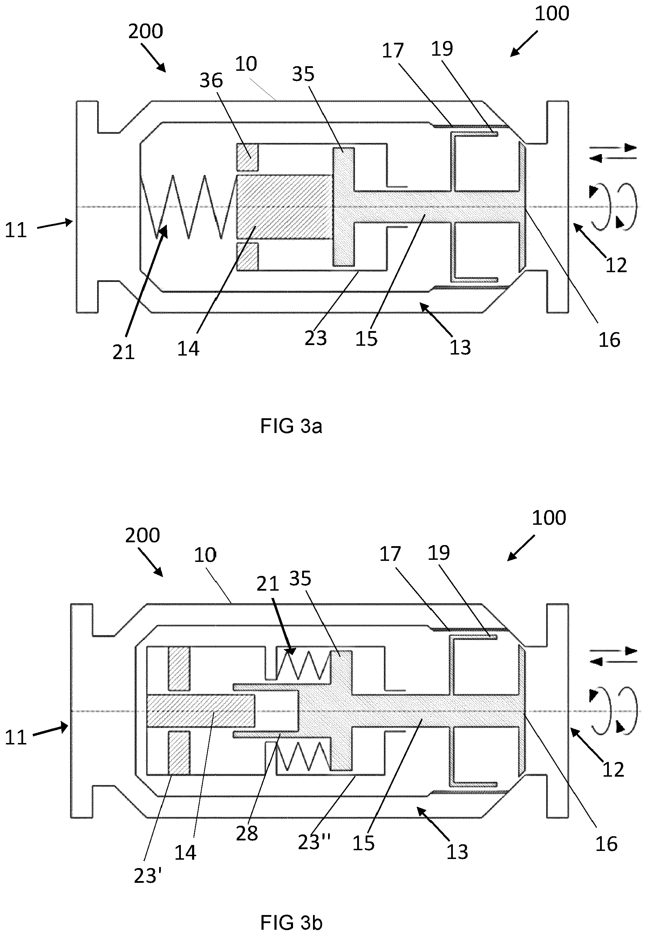

Fig. 3a bis 3d zeigen schematische Schnittdarstellungen von Ventilsystemen 200 gemäß Ausführungsbeispielen. Sofern nicht anders beschrieben weisen die jeweiligen Ventile 100 der Fig. 3a bis 3d dieselben Elemente und/oder Komponenten wie das Ventil 100 der Fig. 1 oder Fig. 2a bis 2d auf. Im Gegensatz zu den Fig. 2a bis 2d sind die jeweilige Antrieben 23 der Ventilsysteme 200 im Gehäuse 10 des Ventils 100 angeordnet.

Aufgrund der Baugröße und der Art des Antriebes 23 kann das gesamte Antriebskonzept im Inneren des Ventilgehäuses verbaut werden. Somit werden, anders als bei den in der Regel außerhalb des Ventils 100 montierten Antrieben, keine beweglichen Verbindungen vom Inneren des Ventils 100 nach außen benötigt. Dies kann dafür sorgen, dass auch weder Wartungs- noch Dichtungsaufwand anfallen kann.

Durch den Betrieb eines Ventils 100 durch einen außerhalb des Gehäuses 10 liegenden Antrieb 23 können in der Regel Umlenkmechanismen benötigt werden. Diese müssen sowohl eine Kraft- als auch eine Bewegungsübertragung aus einer radialen oder axialen Antriebsbewegung in eine axiale Bewegung, oft um etwa 90°, ermöglichen. Hierfür kann zum Beispiel ein Gelenkmechanismus verwendet werden.

Durch die Aufnahme des Antriebs 23 in das Gehäuse 10 des Ventils 100 kann auch, im Gegensatz zu den Ventilsystemen 200 der Fig. 2a bis 2d, der Fluidauslass 12 axial ausgerichtet zum Fluideinlasse 11 sein.

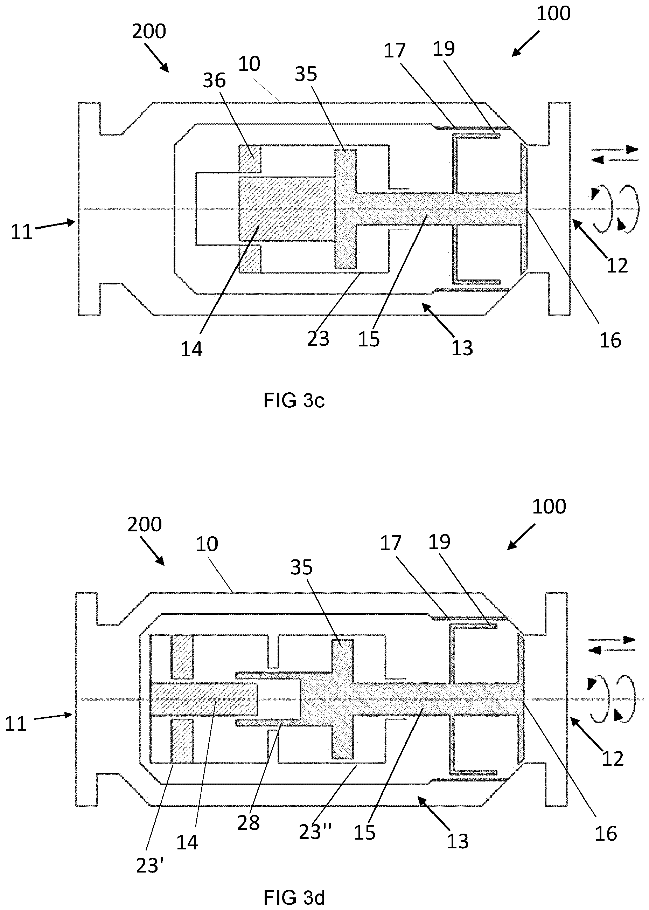

Gelenkmechanismen werden bei ihrer Funktion starken Biege-, Reibe- und Scherkräften ausgesetzt und sind somit stark verschleiß- und störanfällig. Ebenso können die Verlustleistungen durch die Bewegungs- und Kraftübertragung groß sein und können so eine entsprechend große Antriebseinheit voraussetzen, welche diese kompensieren soll. Solche Verlustleistungen können bei einem innenliegenden Antrieb 23 wie in der Fig. 3 gezeigt komplett entfallen. Durch den Entfall dieser Kraft- und Bewegungsübertragung kann der Antrieb 23 entsprechend klein ausgelegt werden und kann somit effizient und energiesparend ausgeführt sein.

Es sei bemerkt, dass durch Zwangsschmierung und nitrierte Oberflächen des Steilgewindes und/oder der Zahnverbindung 28 eine hohe Lebensdauer des Antriebs 23 gewährleistet werden kann.

Ergänzend sei darauf hingewiesen, dass die Begriffe "umfassend" und "aufweisend" keine anderen Elemente ausschließen und die unbestimmten Artikel "eine" oder "ein" keine Vielzahl ausschließen. Ferner sei darauf hingewiesen, dass Merkmale und Schritte, die mit Verweis auf eines der obigen Ausführungsbeispiele beschrieben worden sind, auch in Kombination mit anderen Merkmalen und Schritten anderer oben beschriebener Ausführungsbeispiele verwendet werden können. Bezugszeichen in den Ansprüchen sind nicht als Einschränkung anzusehen.

### Bezuaszeichenliste

- 100: Ventil
- 200: Ventilsystem
- 10: Gehäuse
- 11: Fluideinlass
- 12: Fluidauslass
- 13: Fluidleitung
- 14: Antriebswelle
- 15: Kolben
- 16: Dichtfläche
- 17: erster Durchgangskörper
- 18: statische Durchgangsöffnung
- 19: zweiter Durchgangskörper
- 20: dynamische Durchgangsöffnung
- 21: Federelement
- 22: Anschluss/Fluidanschluss
- 23: Antrieb
- 24: Stützstruktur
- 26: Durchflussöffnung
- 27: statische Dichtfläche
- 28: Zahnverbindung
- 34: Verbindungsabschnitt
- 35: Antriebskolben
- 36: Antriebsgehäuse
- Z1: erste Druckzone
- Z2: zweite Druckzone

## Patentansprüche

1. Ventil (100) für eine Fluidleitung, aufweisend
- ein Gehäuse (10) mit einem Fluideinlass (11), einem Fluidauslass (12) und einer Fluidleitung (13) zur Durchleitung eines Fluides von dem Fluideinlass (11) zu dem Fluidauslass (12),
- einen im Gehäuse angeordneten Kolben (15) mit einer Dichtfläche (16), der in einer Öffnungsstellung den Fluidauslass (12) zur Durchleitung des Fluides freigibt und in einer Schließstellung den Fluidauslass (12) zur Sperrung der Durchleitung des Fluides verschließt,
- wobei der Kolben (15) zur Bewegung zwischen der Öffnungsstellung und der Schließstellung über eine Antriebswelle (14) eines Ventilsystems (200) axial- und drehbeweglich oder drehbeweglich geführt ist,
- einen in der Fluidleitung (13) angeordneten ersten Durchgangskörper (17), welcher statisch innerhalb des Gehäuses (10) befestigt ist und welcher zumindest eine statische Durchgangsöffnung (18) zur Durchleitung des Fluides von dem Fluideinlass (11) zu dem Fluidauslass (12) aufweist,
- einen zweiten Durchgangskörper (19), welcher über den Kolben (15) und/oder über der Antriebswelle (14) innerhalb des ersten Durchgangskörpers (17) axial- und drehbeweglich oder drehbeweglich geführt ist und welcher zur Durchleitung des Fluides von dem Fluideinlass (11) zu dem Fluidauslass (12) zumindest eine dynamische Durchgangsöffnung (20) aufweist,
- wobei der Kolben (15) und der zweite Durchgangskörper (19) an der Antriebswelle (14) des Ventilsystems (200) gekoppelt sind, und
- wobei der zweite Durchgangskörper (19) mittels des Kolbens (15) und/oder der Antriebswelle (14) derart axial verschoben und gedreht oder gedreht zu dem ersten Durchgangskörper (17) anordenbar ist, dass in einer Durchlassstellung des zweiten Durchgangskörpers (19) die zumindest eine dynamische Durchgangsöffnung (20) des zweiten Durchgangskörpers (19) zur Durchleitung des Fluides zumindest teilweise fluchtend zu der zumindest einen statischen Durchgangsöffnung (18) des ersten Durchgangskörpers angeordnet ist, und dass in einer Sperrstellung des zweiten Durchgangskörpers (19) der zweite Durchgangskörper (19) die zumindest eine statische Durchgangsöffnung (18) des ersten Durchgangskörpers (17) zur Sperrung der Durchleitung des Fluides verschließt.

2. Ventil (100) nach Anspruch 1,
**dadurch gekennzeichnet,**
**dass** der erste Durchgangskörper (17) zylindrisch ausgeführt ist und eine Vielzahl von statischen Durchgangsöffnungen (18) aufweist und dass der zweite Durchgangskörper (19) zylindrisch ausgeführt ist, eine Vielzahl von dynamischen Durchgangsöffnungen (20) aufweist und im Inneren des ersten Durchgangskörpers (17) am ersten Durchgangskörper (17) axial- und drehbeweglich oder drehbeweglich anliegt.

3. Ventil (100) nach Anspruch 1 oder 2,
**dadurch gekennzeichnet,**
**dass** die Außenwandung des zweiten Durchgangskörpers (19) abdichtend an der Innenwandung des ersten Durchgangskörpers (17) beweglich anliegt.

4. Ventil (100) nach wenigstens einem der vorhergehenden Ansprüche,
**dadurch gekennzeichnet,**
**dass** die zumindest eine statische Durchgangsöffnung (18) eine längliche, eine spiralförmige, eine ovale, eine eckige und/oder eine kreisrunde Form aufweist und dass die zumindest eine dynamische Durchgangsöffnung (20) eine im Vergleich zu der zumindest einen statischen Durchgangsöffnung (18) gleiche Form aufweist.

5. Ventil (100) nach wenigstens einem der vorhergehenden Ansprüche,
**dadurch gekennzeichnet,**
**dass** die Querschnittsfläche der zumindest einen statischen Durchgangsöffnung (18) von der Außenwandung des ersten Durchgangskörpers (17) zu der Innenwandung des ersten Durchgangskörpers (17) hin abnimmt, insbesondere gleichmäßig abnimmt und/oder
**dass** die zumindest eine statische Durchgangsöffnung (18) und/oder die zumindest eine dynamische Durchgangsöffnung (20) geneigt zu der Drehachse des Kolbens (15) verläuft/verlaufen.

6. Ventilsystem (200) für eine Fluidleitung zur Regelung einer Durchleitung eines Fluides, aufweisend
ein Ventil (100) nach einem der Ansprüche 1 bis 5,
und einen Antrieb (23) mit einer axial- und drehbeweglich oder drehbeweglich gelagerten Antriebswelle (14),
wobei der Kolben (15) des Ventils (100) zumindest indirekt mit der Antriebswelle (14) des Antriebs (23) gekoppelt ist.

7. Ventilsystem (200) nach Anspruch 6,
wobei der Antrieb (23) wenigstens ein Federelement (21) aufweist, und
wobei das wenigstens ein Federelement (21) innerhalb des Antriebs (23) derart angeordnet ist, dass es bei einer Bewegung des Kolbens (15) des Ventils und/oder eines Antriebskolbens (35) des Antriebs (23) in Richtung der Öffnungsstellung vorspannbar ist, um eine Kraft auf den Kolben (15) des Ventils und/ auf den Antriebskolben (35) des Antriebs (23) in Richtung der Schließstellung des Kolbens (15) auszuüben.

8. Ventilsystem (200) nach einem der Ansprüche 6 und 7,
**dadurch gekennzeichnet,**
**dass** zum Antrieb der Antriebswelle (14) Anschlüsse (22), insbesondere Fluidanschlüsse, vorgesehen sind,
und/oder
**dass** der Antrieb (23) des Ventilsystems (200) zum axial- und drehbeweglichen oder drehbeweglichen Antreiben der Antriebswelle (14) innerhalb des Gehäuses (10) des Ventils (100) angeordnet ist.

9. Ventilsystem (200) nach wenigstens einem der Ansprüche 6 bis 8,
**dadurch gekennzeichnet,**
**dass** der Antrieb einen Antriebskolben (35) aufweist, welcher zumindest indirekt mit dem Kolben (15) des Ventils (100) gekoppelt ist, wobei der Antriebskolben (35) und die Antriebswelle (14) des Antriebs (23) jeweils ein Steilgewinde aufweisen, welche mit Rechts-Linkssteigung, vorzugsweise mit Rechtssteigung oder Linkssteigung, versehen sind.

10. Ventilsystem (200) nach wenigstens einem der Ansprüche 6 bis 9,
**dadurch gekennzeichnet,**
**dass** wenigstens eine Hydraulikvorrichtung innerhalb des Gehäuses (10) des Ventils (100) derart angeordnet ist, dass durch sie der Kolben (15) des Ventils (100) zwischen der Schließstellung und der Öffnungsstellung hin- und her bewegbar ist.

11. Ventilsystem (200) nach wenigstens einem der Ansprüche 6 bis 10,
**dadurch gekennzeichnet,**
**dass** das Ventilsystem (200) weiter
eine Steuereinheit aufweist,
wobei die Steuereinheit dazu eingerichtet ist, die Antriebswelle (14), insbesondere den Antrieb (23) des Ventilsystems (200), zu steuern, um den Kolben (15) des Ventils (100) zwischen einer Öffnungsstellung und einer Schließstellung, insbesondere stufenlos, zu bewegen und den zweiten Durchgangskörper (19) des Ventils (100) zwischen einer Durchlassstellung und einer Sperrstellung, insbesondere stufenlos, zu bewegen.

12. Verfahren zum Betreiben eines Ventils (100), insbesondere eines Ventilsystems (200), für eine Fluidleitung nach wenigstens einem der vorhergehenden Ansprüche 1 bis 5, aufweisend folgende Schritte:
• ein Fluid wird mit einer definierten Strömung in das Gehäuse (10) des Ventils (100) durch einem Fluideinlass (11) durchgeleitet,
• das Fluid wird zu einer ersten Druckzone (Z1) hin durchgeleitet, wobei die erste Druckzone (Z1) in Strömungsrichtung vor dem ersten Durchgangskörper (17) im Gehäuse (10) angeordnet ist,
• der Kolben (15) des Ventils (100) wird axial- und drehbeweglich oder drehbeweglich mittels eines Antriebs (23) angetrieben,
• über den Kolben (15) des Ventils (100) und/oder über eine Antriebswelle (14) eines Ventilsystems (200), insbesondere eines Ventilsystems (200) nach wenigstens einem der vorhergehenden Ansprüche 6 bis 11, wird der zweite Durchgangskörper (19) axial- und drehbeweglich oder drehbeweglich geführt, um einen ersten Durchfluss, mit welchem das Fluid von der ersten Druckzone (Z1) zu einer zweiten Druckzone (Z2) hingeleitet wird, zu steuern, insbesondere zu reduzieren, wobei die zweite Druckzone (Z2) in Strömungsrichtung nach der zumindest einen dynamischen Durchgangsöffnung (20) des zweiten Durchgangskörpers (19) angeordnet ist,
• der Kolben (15) des Ventils (100) wird axial- und drehbeweglich oder drehbeweglich, insbesondere über die Antriebswelle (14) des Ventilsystems (200), geführt, um einen zweiten Durchfluss, mit welchem das Fluid von der zweiten Druckzone (Z2) durch den Fluidauslass (12) des Gehäuses (10) geleitet wird, zu steuern,
wobei bei der Führung des zweiten Durchgangskörpers (19) eine relative Bewegung der zumindest einen dynamischen Durchgangsöffnung (20) zu der zumindest einen statischen Durchgangsöffnung (18) derart stattfindet, dass ein überlappender Bereich der zumindest einen dynamischen Durchgangsöffnung (20) mit der zumindest einen statischen Durchgangsöffnung (18) verkleinerbar oder vergrößerbar ist, und
wobei zwischen der ersten Druckzone (Z1) und der zweiten Druckzone (Z2) ein Druckunterschied herrscht.

13. Verfahren nach Anspruch 12,
**dadurch gekennzeichnet,**
**dass** der Druckunterschied zwischen der ersten Druckzone (Z1) und der zweiten Druckzone (Z2) durch die Steuerung des zweiten Durchgangskörpers (19) und/oder des Kolbens (15) geregelt wird.

14. Verfahren nach einem der Ansprüche 12 oder 13,
**dadurch gekennzeichnet,**
**dass** der zweite Durchgangskörper (19) und der Kolben (15) des Ventils über die Antriebswelle (14) eines/des Ventilsystems (200) synchron axial- und drehbeweglich oder drehbeweglich geführt werden.

15. Verfahren nach wenigstens einem der Ansprüche 12 bis 14,
**dadurch gekennzeichnet,**
**dass** der Kolben (15) des Ventils (100) von der Öffnungsstellung zum Freigeben des Fluidauslasses (12) zur Schließstellung zur Sperrung des Fluidauslasses (12) und umgekehrt geführt wird, und/oder
**dass** der zweite Durchgangskörper (19) von der Durchlassstellung zu der Sperrstellung geführt wird.
